# EUROPEAN PATENT SPECIFICATION

(11) **EP 0 938 643 B1**
(45) Date of publication and mention of the grant of the patent: **12.06.2002**
(21) Application number: 97912360.1
(22) Date of filing: 14.11.1997
(51) Int. Cl.: G01B 9/02, G01D 5/26

(54) **INTEGRATED INTERFEROMETER**
INTEGRIERTER INTERFEROMETER
INTERFEROMETRE INTEGRE

(30) Priority: 15.11.1996 GB 9623762
(43) Date of publication of application: 01.09.1999
(73) Proprietor: Bookham Technology PLC, Abingdon, Oxon OX14 4RY (GB)
(72) Inventor: PECHSTEDT, Ralf-Dieter, Wantage, Oxon. OX12 9HU (GB); McKENZIE, James Stuart, Uxbridge, Middlesex UB8 2PL (GB); LU, Yicheng, Wantage, Oxon. OX12 8HE (GB)
(74) Representative: Unwin, Stephen Geoffrey
(86) International application number: GB9703144
(87) International publication number: WO9822775

(56) References cited:
- WO-A-94/11708
- DE-C- 4 204 521
- DE-U- 8 809 825
- US-A- 4 445 751
- D. JESTEL ET AL: "Integrated-optic interferometric microdisplacement sensor in glass with thermo-optic phase modulation" ELECTRONICS LETTERS, vol. 26, no. 15, 19 July 1990, STEVENAGE, HERTS.,GB, pages 1144-1145, XP000107186
- H. GRÜBEL, G. NITSCH: "Interferometrisches Echtzeitwegmesssystem mit vollständig dielectrischem, integriert optischem Sensorkopf" TM TECHNISCHES MESSEN , vol. 58, no. 4, April 1991, MÜNCHEN, DE, pages 165-169, XP000227769

## Description

This invention relates to an interferometer integrated on an optical chip.

Optical interferometry is a well established technique in order to perform high precision and highly sensitive measurements. The key element in this technique is an interferometer, acting as follows. Light emerging from a laser source is split into two separate beams. One beam is exposed to the measurand (sensor arm of the interferometer) whereas the other one is shielded from the environment (reference arm of the interferometer). Traversing through the sensor arm, the light is acquiring an additional phase shift Ø in comparison to the light travelling in the reference arm. The phase shift is proportional to the measurand and represents the signal. Its value is determined by re-combining the sensor and the reference beam at the output of the interferometer. In dependence of whether the two beams are in or out of phase, constructive or destructive interference occurs, resulting in a sinusoidal intensity pattern (fringe). As only two beams are interfering, this type of interferometer is referred to as a two-beam interferometer. The output of the interferometer is non-linear with phase and the sensitivity to small changes in phase is zero around Ø = 0 and maximum around Ø = π/2 (quadrature point). Hence, some signal processing is required in order to maintain a fixed high sensitivity and recover the phase shift in a linear fashion. The simplest way to do this is to introduce an active feedback using the reference arm to maintain a constant phase bias at Ø = π/2 (active homodyne). This requires an active element which, although possible in some applications, may be undesirable or not possible in other applications.

Due to the periodic nature of the transfer function with phase, no absolute phase measurement is possible. Switching off and on the instrument also results in a loss of reference.

The measurement technique employing a single-mode laser is referred to as a coherent approach. Although very high sensitivities are achievable with this approach, it suffers from a number of significant drawbacks when used in practical applications. As the laser wavelength effectively acts as a calibration reference in the coherent approach, it has to be either stabilised or monitored for high-accuracy measurements. Diode lasers, for instance, have to be temperature controlled in order to achieve high wavelength stability. In most cases, an optical isolator is also required in order to stop light back reflected from a sensor entering the laser which would cause frequency instabilities and hence, a reduction of the signal-to-noise ratio of a measurement system. An optical isolator and stabilisation features add costs and complexity to the system.

A number of problems also arise if a sensor consisting, for instance, of a fibre optical Fabry-Perot type sensor is required to be operated at a distance from the laser source. In this case the interference takes place at the remote sensor and the original phase information is transformed into an amplitude signal which travels back along an optical fibre to a detector. As a consequence, any fluctuations of the source power or additional losses introduced along the fibre due to ageing or environmental changes will directly influence the measurement result. In addition, for remote operation, signal processing schemes require the ability to tune the emission wavelength of the laser source over a considerable range. For instance, the active homodyne technique described above can be adopted and the required phase shift for the active feedback is generated by a wavelength shift which will induce a phase shift in an interferometer with a non-zero optical path difference (OPD). The large tuning range required could be achieved using distributed feedback (DFB) or distributed Bragg (DBR) lasers. However, these lasers are expensive and mostly require an optical isolator to stop back reflections. Additional difficulties arise due to the fact that although relatively large, the tuning range is effectively limited to a few nm. To achieve the phase shift necessary for implementation of signal processing schemes permitting remote operation (about 2π rad or larger), the OPD has to be at least several mm long. This means that the two reflecting surfaces which form the Fabry-Perot cavity are also separated by several mm. In comparison to an OPD of the order of 100µm - 150µm (such as possible in the white-light approach described below), the same change in ambient temperature will result in a change of the distance between these two reflecting surfaces which is one to two order of magnitudes larger. As the signal to be measured (for instance, a change in applied pressure) is detected via the same change in distance between the two reflecting surfaces, the error signal due to ambient temperature changes is much more pronounced in a larger cavity.

The above mentioned problems can be overcome with a related technique referred to as white-light interferometry. Instead of using a coherent laser source, a broad-band light source with a spectral width Δλ much larger than that of a laser is employed. The coherence length I_{c} of the light source is related to the spectral width by the approximate relationship I_{c} ~ λₚₑₐₖ²/Δλ, with λₚₑₐₖ being the centre of the emission curve. Typically, Δλ ranges from ∼30nm to ∼50nm for a superluminescent diode (SLD), resulting in a short coherence length between 55 and 35µm, respectively. This means that the two beams travelling through the interferometer do not interact with each other when recombined if the optical path difference (OPD) is deliberately made much longer than the coherence length of the source (OPD >> I_{c}). In practice, it is sufficient to chose the OPD about three times larger than the coherence length, leading to a minimum OPD_{S} of around 100µm to 160µm. The additional phase shift generated by the measurand cannot be recovered employing only one interferometer (the sensing interferometer). However, by feeding the output of the sensing interferometer into a second interferometer (the processing interferometer) with an OPD_{P} similar to the OPD_{S} of the sensing interferometer (|OPD_{P} - OPD_{S}|<< I_{c}), a portion of the two beams can be brought back in phase again. In order to appreciate the advantages of white-light interferometry, it is useful to consider the wavelength domain. After passing the sensing interferometer with an OPD_{S} >> I_{c}, the light from the broad band source contains a number of maxima and minima corresponding to constructive or destructive interference at the corresponding wavelength. This is referred to as a channelled spectrum. A change in OPD will cause a change in the interference conditions, resulting in a shift of the whole channelled spectrum. Hence, the signal information is encoded in the wavelength domain and any intensity fluctuations in the system do not effect the measurement results.

If the processing interferometer is of exactly the same OPD as the sensing interferometer, a maximum transmission is generated as the two channelled spectra are of exactly the same shape and located at the same wavelength position. Any deviation from the condition OPD_{S} = OPD_{P} will result in a decrease in visibility until it drops to zero for |OPD_{P} - OPD_{S}| >> I_{c}. The result is a sinusoidal fringe pattern under a Gaussian-type envelope with the maximum value (central fringe) occurring at OPD_{S} = OPD_{P}. If the processing interferometer is calibrated, an absolute phase measurement is possible by identifying the central fringe.

The white-light approach described above offers a number of advantages: insensitivity to intensity fluctuations as the signal information is encoded in the wavelength domain; the wavelength stability requirements are about two orders of magnitude less in comparison to coherent methods as the effective OPD equals OPD_{S} - OPD_{P} and is of the order of 10µm in contrast to being around 1 mm; and light sources like SLD's or multimode lasers can be employed which are less sensitive to back reflections, making the use of an optical isolator unnecessary. The smaller sensor cavity size means a much reduced temperature cross-sensitivity.

Conventionally, in white-light interferometry the processing interferometer is built of discrete components, using mirrors mounted on translation stages or fibre optical phase modulators in order to change OPD_{P}. Translation stages provide a restricted maximum modulation speed and hence, can only be used to measure relatively low-frequency signals. In an all-fibre version of a processing interferometer it is very difficult to achieve and maintain a match of OPD_{P} to OPD_{S} to within ∼ 10 micron. Temperature stabilisation is also required to avoid thermal drift of OPD_{P}. In addition, such processing interferometers are highly sensitive to environmental changes like sound waves and vibrations. This reduces the signal-to-noise ratio significantly at lower signal frequencies. Precise alignment features are also required at the interface between the processing interferometer and the optical fibre. In summary, the conventional realisation of a white-light system as described above prevents a full realisation of the principal advantages that the white-light approach offers in comparison to the coherent approach. Furthermore, the discrete realisation of the processing interferometer including separate light sources, detectors and couplers does not lend itself to cost-effective manufacture, so limiting these systems to niche market applications.

EP-A-0433552 discloses a silicon-based rib waveguide optical modulator and its use in a Mach-Zehnder modulator.

GB-A-2230616 discloses a silicon bi-polar phase modulator and its use in a Mach-Zehnder modulator.

WO-A-95/08787 (which is discussed further below) discloses a phase modulator formed on a silicon-on-insulator chip which can be used in the present invention.

WO-A-94/11708 discloses an interferometric optical sensor and describes a system formed of discrete balk components. It refers to the possibility of an integrated optical design but provides no details thereof.

This invention aims to provide an integrated interferometer which enables the disadvantages discussed above to be overcome or avoided.

According to the invention there is provided an interferometer integrated on an optical chip, which comprises a layer of silicon separated from a substrate by a layer of insulating material, the optical chip being provided with: fibre connection means for connecting the optical chip to one or more optical fibres, the fibre connection means being provided by a groove formed in the substrate for receiving an optical fibre; waveguide means for transmitting light to or from the fibre connection means, the waveguide means being provided by a rib waveguide formed in the said layer of silicon; and at least one phase modulator to alter the phase of light travelling along a rib waveguide on the chip, the arrangement being such as to form an interferometer in which light transmitted along different optical paths can be combined and the effective path length of at least one of the said optical paths can be altered.

Other features of the invention will be apparent from the following description and from the subsidiary claims of the specification.

The invention will now be further described, merely by way of example, with reference to the accompanying drawings, in which:
Figure 1 is a perspective view illustrating the type of optical waveguide used in a preferred embodiment of the present invention;
Figure 2 is a cross-sectional view of such a waveguide illustrating a phase modulator used in a preferred embodiment of the present invention;
Figures 3A and 3B are side and plan views, respectively, of a fibre connector used in a preferred embodiment of the present invention;
Figure 4 is a schematic diagram of a sensing system employing an integrated interferometer according to a first embodiment of the invention;
Figure 5 illustrates the output signals of photodetectors used in the arrangement shown in Figure 4;
Figure 6 is a schematic diagram of an alternative arrangement of the sensing system shown in Figure 4;
Figures 7A and 7B are a plan view and cross-sectional view respectively illustrating the assembly of an optical component to the optical chip as used in a preferred embodiment of the present invention;
Figure 8 is a schematic diagram of a sensing system employing an integrated interferometer according to a second embodiment of the invention; and
Figure 9 is a cross-sectional view illustrating an alternative way of assembling a light source or a light detector on the optical chip.

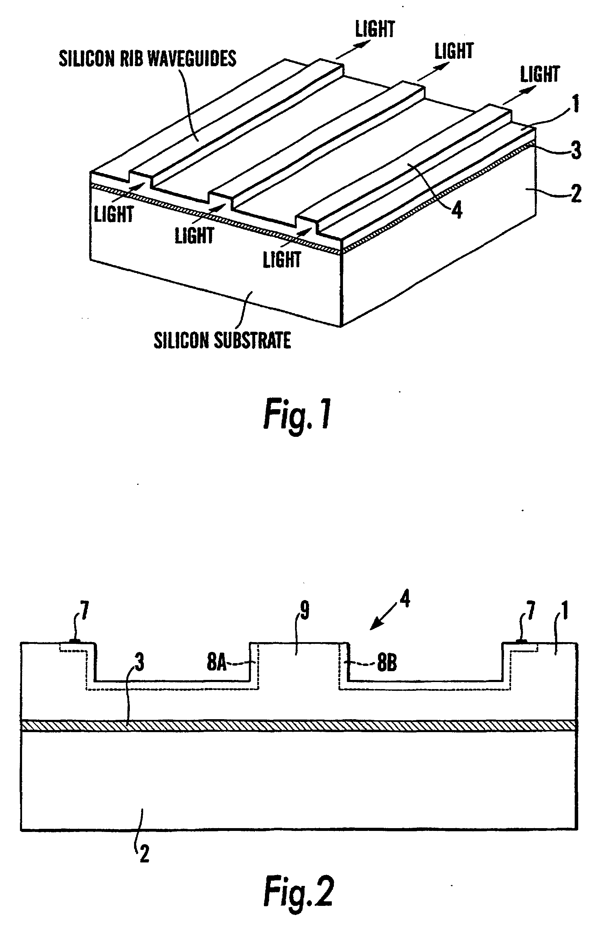

The interferometer described herein is based on a silicon-on-insulator chip of the type shown in Figure 1. A process for forming this type of chip is described in a paper entitled "Reduced defect density in silicon-on-insulator structures formed by oxygen implantation in two steps" by J. Morgail et al. Appl. Phys. Lett., 54, p526, 1989. This describes a process for forming a Very Large Scale Integrated (VLSI) silicon-on-insulator wafer. The silicon layer of such a wafer is increased, e.g. by epitaxial growth, to make it suitable for forming the basis of the integrated interferometer described herein.

Figure 1 also shows optical waveguides formed on such a chip. The chip comprises a layer of silicon 1 which is separated from a silicon substrate 2 by a layer of silicon dioxide 3. Rib waveguides 4 are formed in the silicon layer 1. Further details of this form of waveguide are given in a paper entitled "Low Loss Single Mode Optical Waveguides with Large Cross-Section in Silicon-on-Insulator" by J. Schmidtchen et al in Electronic Letters, 27, p1486, 1991 and in PCT patent specification no. WO95/08787.

Waveguides of the type described in WO95/08787 and shown in Figure 1, are provided for transmitting light between various elements integrated onto the chip. This form of waveguide provides a single mode, low loss (typically 0.5 dB/cm for the wavelength range 1.2 to 1.6 microns) waveguide typically with dimensions in the order of 3 to 4 microns which can be coupled to optical fibres and which is compatible with other integrated components. This form of waveguide can also be easily fabricated from conventional silicon-on-insulator wafers (as described in WO95/08787) and so is relatively inexpensive to manufacture.

The integrated interferometer described herein comprises a number of components integrated on such a chip. Fibre connectors are provided for connecting the chip to one or more optical fibres and at least one phase modulator is provided for modulating light transmitted in a wavguide on the chip.

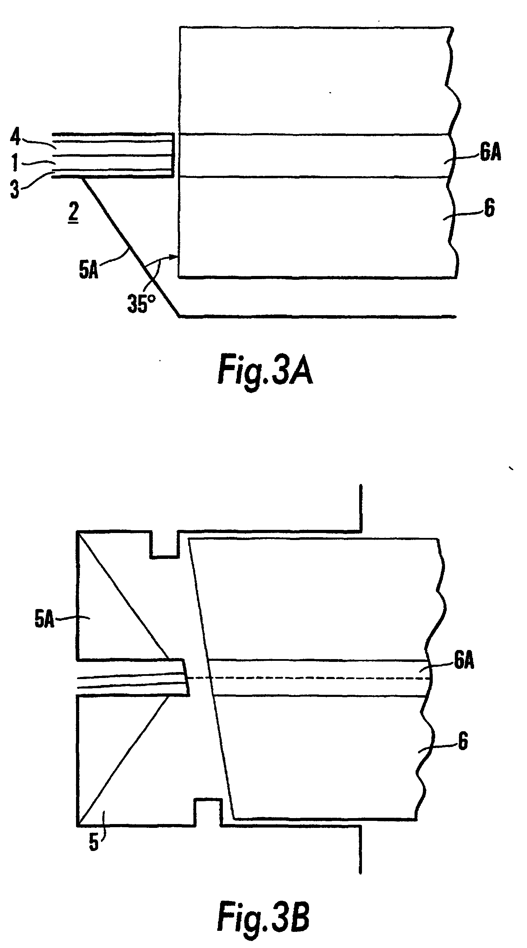

Co-pending PCT application no. PCT/GB96/01068 describes a suitable form of fibre connector. Such a fibre connector is shown in Figures 3A and 3B of the present specification.

As shown in Figures 3A and 3B, a V-groove 5 is formed in the silicon substrate 2. Such a V-groove can be formed in silicon with great accuracy using a KOH type of etch, such as CsOH, as the faces of the groove are etched along specific crystallographic planes within the silicon. The depth of the groove 5 can thus be accurately determined by precisely controlling the width of the groove by an appropriate masking technique. A feature of such a groove is that it does not have a perpendicular end face as the end face 5A is itself defined by a crystallographic plane within the silicon and, as shown in Figure 3A, the end face 5A is inclined at an angle of 35° to the perpendicular. This means that an optical fibre 6 positioned within the groove 5 cannot be butted up to the end of a waveguide 4 formed on the surface of the substrate 2.

In order to overcome this problem, the rib waveguide 4 is formed such that it projects over the end face 5A of the groove 5 so that the end of the waveguide 4 can be brought into close proximity with the end of the core 6A of an optical fibre 6 positioned in the groove 5. If the groove 5 has a depth of around 60 microns, the projecting portion of the waveguide 4 will thus have a length of around 80 microns.

Such a structure can be fabricated by using an anisotropic etchant (such as the KOH type of etch referred to above or one of its variants) which forms the groove 5 and at the same time undercuts the end of the optical waveguide 4 whilst the end face 5A of the groove is being formed without destroying the waveguide so that the latter remains overhanging the end face 5A of the groove. This depends upon the use of an etch which selectively etches the substrate material, i.e. silicon, in favour of the insulating layer 3 of silicon dioxide. The underside of the silicon waveguide 4 is thus protected by the layer of silicon dioxide 3 during the etching process. The upper and side faces of the rib waveguide 4 are also protected during this process by providing a protective layer, e.g. of silicon dioxide, over the rib waveguide, e.g. by plasma enhanced chemical vapour deposition. This protective layer can also be used to protect the end face of the rib waveguide so as to protect the end face from damage and prevent the etchant attacking the silicon waveguide. The protective layer is removed at a later stage in the fabrication process.

Other types of fibre connector compatible with silicon-on-insulator technology may also be used.

WO95/08787 referred to above also describes a suitable form of modulator for use in the integrated interferometer. Such a modulator is shown in Figure 2 of the present specification. It comprises a doped junction in form of a diode formed across a rib waveguide such as that shown in Figure 1 and metalised contacts 7 are provided for connection to an electronic drive which can provide a modulated voltage across the diode.

Figure 2 is a cross-section through the junction and it can be seen that two heavily doped (approximately ≥ 10¹⁹ impurity atoms/cm³) regions 8A and 8B are formed in the sides of the rib 4; one region 8A is n-doped while the other region 8B is p-doped. The region 9 between the two highly doped regions 8A and 8B is either lightly doped n or p, or nominally undoped. Such a diode is known as a pin diode. The doping concentrations of the junction 8A, 8B and 9 are selected such that when a forward bias voltage is applied to the diode a free carrier injection zone extends across the region 9 (electrons are injected from the n-type region 8A into region 9 and holes are injected from the p-type region 8B into region 9). The doped regions 8A and 8B extend along a length of the rib 4 determined by the desired interaction length of the device. Other arrangements of the doped regions are possible, e.g. they may be formed in the silicon layer 1 on either side of the rib 4 rather than in the side faces of the rib.

Modulation of the forward bias voltage applied across the junction modulates the free carrier concentration in the rib waveguide 4 over the length of the diode junction and results in modulation of the refractive index in the rib waveguide. In turn, this refractive index modulation modulates the modal propagation constants of the rib waveguide 4 resulting in a modulation of the effective refractive indices and the effective length of the rib waveguide. Modulation of the effective length of the waveguide modulates the phase difference between the light entering the device and that leaving the device. Hence. the device acts as an optical phase modulator.

Other types of modulator compatible with silicon-on-insulator technology may be used, for instance, a thermal modulator based on a silicon-on-insulator rib waveguide.

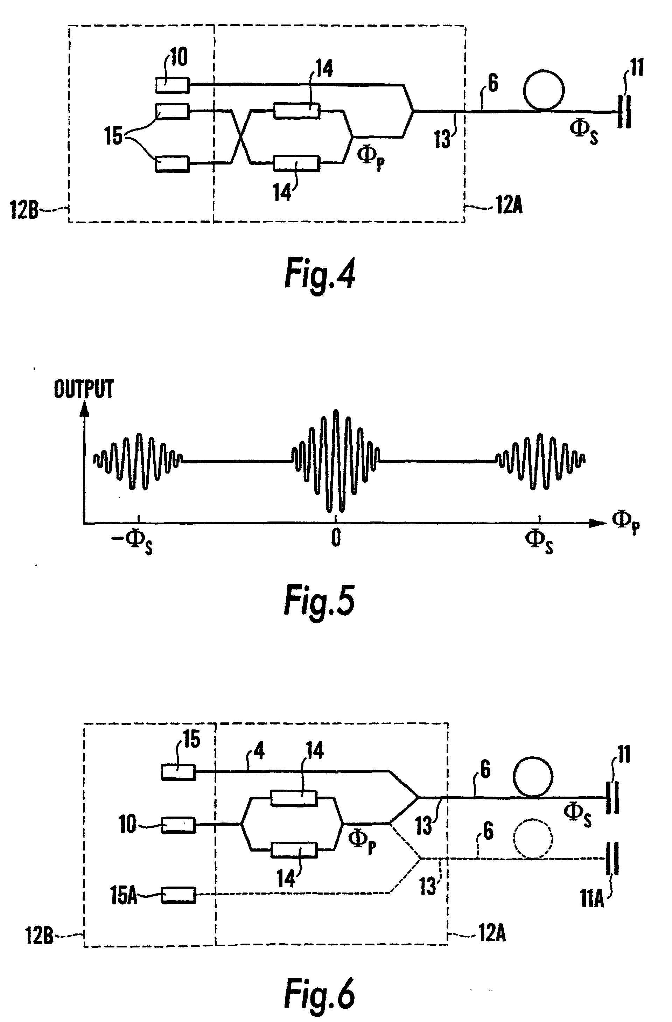

Figure 4 illustrates an interferometer integrated on an optical chip 12A comprising the components described above. Light from a broad band source 10 such as a superluminescent diode (SLD) or edge-emitting diodes (E-LED), typically with a 40nm wavelength spread, is fed into a waveguide 4 and coupled by a fibre connector 13 (such as that shown in Figure 3) into a single mode optical fibre 6 to be transmitted to a sensor head 11, such as, for instance, a reflective Fabry-Perot (Fizeau) type cavity which acts as a sensing interferometer. Such a sensor head may be used to measure a wide range of parameters, one example being the measurement of pressure variations, e.g. in the cylinders of an internal combustion engine. A phase shift Øₛ induced in the sensor head 11 is proportional to the parameter, e.g. pressure, to be measured. The optical return signal travels back along the same optical fibre 6 and is coupled back onto the chip 12A and serves as the input for an unbalanced Mach-Zehnder interferometer (MZI) with an optical path difference (OPDₚ) to match the optical path difference (OPDₛ) of the sensor head 11. The Mach-Zehnder interferometer acts as a processing interferometer. Two phase modulators 14 (of the type shown in Figure 2) are incorporated into the MZI to generate an additional phase shift Øₚ in the MZI. At the complementary outputs of the MZI, the light is collected by two photodetectors 15.

All the components enclosed in the dashed box 12A (Si waveguides 4, fibre connector 13 and phase modulators 14) are integrated on the chip. However, in a preferred arrangement, the light source 10 and detectors 15 are also mounted on the chip as indicated by the dashed box 12B. If the light source 10 and/or detectors 15 are provided off-chip, additional fibre connectors (not shown) will be required to connect the waveguides 4 on the chip 12A to optical fibres leading to the light source 10 and/or detectors 15.

Several ways of retrieving signal which is proportional to the phase shift Øₛ are possible.

When the optical path difference of the processing interferometer is close to that of the sensing interferometer, the output intensity is of the general form A+B*COS(Ø_{d}), where Ø_{d} = Øₚ - Øₛ is the phase difference corresponding to the difference of OPD. The output as a function of Øₚ is shown schematically in figure 5. Phase Ø_{d} can either be measured or locked to a fixed (close to zero) value by changing Øₚ according to Øₛ.

By locking Ø_{d}, Øₚ is a measurement of Øₛ and thus, of the change of optical path difference of the sensing interferometer, i.e. the measurand. Modulating the processing interferometer, an error signal is generated which is fed-back to lock the optical path difference of the processing interferometer to the optical path difference of the sensing interferometer with a fixed phase difference. As long as the feedback is fast enough, this technique tracks the signal phase (Øₛ) directly and is independent of intensity variations caused by the light source 10, losses in the fibre 6 or the reflectivity change of the sensor head 11. This technique (modulating and locking) requires that the modulating speed is much higher than the signal speed. This technique is thus available with an integrated interferometer as described whereas it cannot be used in prior art systems employing discrete components due to the limited modulation speed.

An output signal can also be generated from the difference signal (I₁-I₂) of the complementary outputs of the MZI, and then locking the system at the quadrature point. The difference signal successfully removes any DC signal and the quadrature points are located at the zero of the output. In this situation, the output is immune from any intensity variation or possible amplitude modulation caused by the phase modulators 14. This technique also simplifies signal processing.

Both locking techniques lock the system at a fixed point (i.e. at a fixed Ø_{d}) by tracing Øₛ through changing Øₚ accordingly. Therefore, the measuring range depends only on the phase modulator range of the processing interferometer. If a large range is required, thermal phase modulators can be employed or combined with phase modulators in the form of a doped junction across the waveguide. The doped phase modulator provides fast modulation and the thermal phase modulator serves for low speed locking.
The use of a phase meter is another possible processing technique which in addition allows for multiplexing more than one sensing interferometer. This technique measures Ø_{d} directly by comparing to a fixed phase reference (i.e. fixed Øₚ). For this technique, only 2π rad phase modulation is required for any measurement range of the sensing interferometer provided that the phase difference Ø_{d} is well within the coherence range of the light source. Again, the modulating frequency needs to be much higher than the signal frequency to be measured. The high speed phase modulation provided by an integrated phase modulator of the type shown in Figure 2 enables this technique to be used whereas it would encounter speed limitations if used in a conventional discrete optical system.

With two phase modulators 14 incorporated, the phase modulators of the MZI can be arranged to work in a pseudo push-pull fashion although each individual phase modulator only works in one direction, i.e. it always makes the optical path shorter by applying a drive current. As the interferometer is path imbalanced, i.e. there is a nonzero optical path difference between the two arms, reducing the optical path of the shorter arm will increase the OPD of the interferometer. On the other hand, reducing the optical path of the longer arm will decrease the OPD of the interferometer. This means that the OPD of the interferometer can be increased or decreased by driving the phase modulator in the shorter arm or in the longer arm, respectively. Therefore, the pseudo push-pull is realised by arranging electronically the two phase modulators working in different directions, i.e. one is driven at increasing drive current and the other one at decreasing drive current at the same time. In this way, the two phase modulators can be treated as a single phase modulator. This technique doubles the overall phase modulating range and reduces the ratio of amplitude modulation to phase range. The described arrangement is different from the usually employed push-pull regime where a phase modulator can be driven both ways, i.e. a positive and a negative phase shift can be created.

As mentioned above, the optical path differences of the processing interferometer and the sensing interferometer must be matched. Typically, matching to within approximately 10 microns is required.

In the arrangement shown in Figure 4 the light from the source 10 is guided directly to the sensor 11 and the back-reflected light is fed into the processing interferometer.

However, as shown in the arrangement illustrated in Figure 6, light from the source 10 may be first fed into the processing interferometer, the output of which is guided to the sensor 11 and the back-reflected light sensed by the detector 15. This arrangement has the advantage that it is easier to use for multiplexing purposes where the same processing interferometer is used to interrogate the signal received from several sensors 11. Figure 6 shows, in dashed lines, the connection of a second sensor 11A and a second detector 15A to the processing interferometer as an example of this. It should be noted that in the case of multiplexing, the method of locking to a quadrature point is not easily applicable and other methods such as the one described earlier which employs a phase meter are used to retrieve the signal.

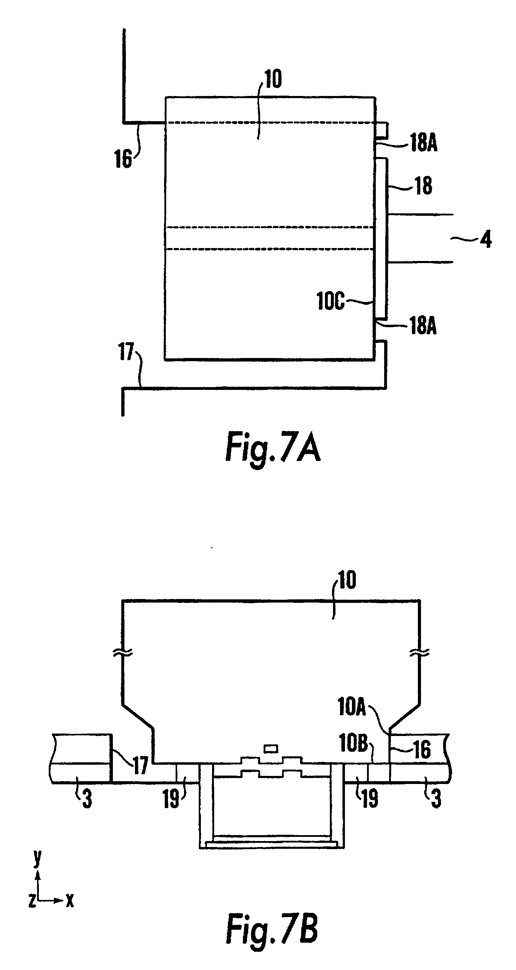

As mentioned above, the broad band light source 10 and detectors 15 are also preferably integrated on the same chip as the other components. The assembly of an optical component with an optical waveguide provided on an optical chip is described in the applicants' co-pending application no. GB2307786A and further described herein with reference to Figures 7A and 7B.

Figures 7A and 7B show an assembly comprising a light source 10 such as a multi-mode laser diode or a SLD which is accurately aligned with an optical waveguide 4, in the form of a rib waveguide, to provide a low loss coupling therebetween (preferably less than 1-3dB loss). The assembly is formed on a silicon-on-insulator chip. The light source 10 is positioned within a recess formed in the silicon-on-insulator chip, the recess being defined by side walls 16 and 17, an end wall 18 and a base support 19.

Lateral alignment (in the direction of the X-axis) of the light source 10 with the rib waveguide 4 is provided by abutment of a side surface 10A of the light source 10 against the side wall 16 of the recess (as shown in Figure 7B). Vertical alignment (in the direction of the Y-axis) is provided by abutment of a side surface 108 the light source 10 against the base support 19 of the recess which, as shown in Figure 7B is provided by a platform formed in the silicon dioxide layer 3 on either side of the recess. In the arrangement shown, the side wall 16 and base support 19 are substantially perpendicular to each other and each lies substantially parallel to the optic axis of the waveguide 4 (which lies along the Z-axis).

The light source 10 is also preferably aligned in the direction of the Z-axis by abutment of a side surface 10C of the light source 10 against projections 18A provided on the end wall 18 of the recess so as to accurately determine the spacing between the light source 10 and the rib waveguide 4.

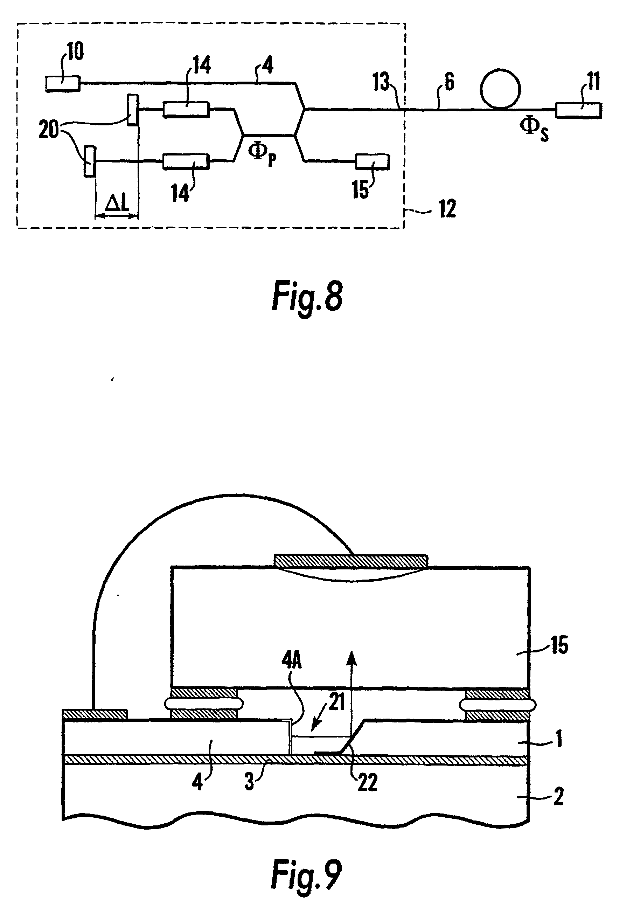

It will be appreciated that the photodetectors 15 can be integrated onto the optical chip in a similar manner. Another way of mounting a light source or a photodetector on a chip is described in the applicants' co-pending application EP-A-1015926 and further described herein with reference to Figure 9.

Figure 9 shows the silicon layer 1, the silicon dioxide layer 3 and the silicon substrate 2. A rib waveguide 4 is formed in the silicon layer 1 and terminates at a facet 4A in a recess 21 formed in the silicon layer 1. On the opposite side of the recess 21, a facet 22 is formed on a side surface of the silicon layer 1. The facet 22 is coated with aluminium (or other optically reflective coating) and is angled to the axis of the waveguide 4. Light emerging from the waveguide facet 4A thus falls on the facet 22 and is reflected so as to be re-directed towards a photodetector 15, such as a photodiode, mounted over the recess 21.

The integrated interferometer described above offers significant advantages over interferometers constructed using bulk optical components. Integration of the various components onto a silicon-on-insulator optical chip provides the possibility of mass-producing such devices in a cost-effective manner. As discussed in PCT patent specification no. WO95/08787, such silicon-on-insulator wafers can be manufactured from conventional wafers used for the construction of Very Large Scale Integrated electronic circuits and so can be manufactured in a highly cost-effective manner. Moreover, the characteristics of such silicon-on-insulator optical chips can be utilised to enable other components, such as the waveguides, fibre connectors, phase modulator, light sources and light detectors to be easily integrated onto the same chip as described above. With other technologies such integration is not easy to achieve, or may not be possible.

The fact that such components can be integrated on a single chip gives rise to many advantages:
A) the various components are automatically aligned with each other during manufacture of the chip so avoiding the need to accurately position separate components;
B) The requirement for matching OPD_{P} to OPD_{S} is easily met as OPD_{P} can be precisely determined in the fabrication of the integrated circuit and the integrated interferometer can be produced in a highly repeatable manner;
C) the technology is compatible with the more stable forms of light source, e.g. superluminescent or edge-emitting diodes, or arrangements which do not require a highly stable light source;
D) being mounted on a single chip the device is small, more robust and has better thermal and environmental stability;
E) the technology used is compatible with optical fibres so avoiding the need for complex and expensive connections between the chip and the fibre;
F) the technology is compatible with integrated phase modulators as described above so enabling the optical path difference of the interferometer to be actively controlled;
G) the technology allows the use of simple processing techniques and is able to cope with higher signal band widths;
H) the technology is able to interrogate signals from a wide range of optical sensors, including sensors based on Bragg-gratings;
I) the use of a silicon-on-insulator chip provides the potential for integrating both an optical circuit and an electronic signal processing circuit on the same chip;
J) the potential for cost-effective manufacture.

The technology described herein, based on the use of silicon-on-insulator optical chips and the integration thereon of various optical components, is known as ASOC™ technology (ASOC being a trade mark of Bookham Technology Plc). Other technologies, such as those based on III-V semiconductors, glass or lithium niobate. either do not readily lend themselves to the degree of integration described above or can not achieve that degree of integration at all.

It will be appreciated that other forms of interferometer, besides the Mach-Zehnder interferometer described above, can be formed using the ASOC™ components described, for instance Michelson or Fabry-Perot interferometers.

Figure 8 shows a schematic diagram of an arrangement using a Michelson interferometer. In the arrangement shown, light from a broad band light source 10 integrated on the chip is fed into a waveguide 4. Light is then coupled from the waveguide 4 into an optical fibre 6, by means of a fibre connector 13, which is connected to a sensor head 11, such as, for example, a Fabry-Perot type sensor. Light returning along the optical fibre 6 contains information about the phase shift Øₛ generated by the signal to be measured. Light from the optical fibre is coupled back onto the chip via fibre connector 13 and enters a Michelson interferometer having an optical path difference equal to 2n_{eff} ΔL (where n_{eff} is the effective propagation index of the waveguide 4 and ΔL is the physical path length difference as shown in the Figure). As shown, the Michelson interferometer is in a reflective configuration with two optical paths extending from a Y-junction and each path terminated by a mirror 20 (which may be formed by a metallic coating on the end face of the rib waveguide). Light returning from the Michelson interferometer is collected by a photodiode 15 which is also integrated on the chip. By making use of phase modulators 14 provided in the two arms of the Michelson interferometer, the phase shift Øₛ can be determined. Such an arrangement may be used in applications requiring a large optical path difference, e.g. of several millimetres.

It will also be appreciated that, if required, more than one light source can be provided on the optical chip.

An integrated interferometer such as that described, has a wide range of applications where a signal to be analysed is encoded in an optical path difference or a change in an optical path difference.

An integrated interferometer as described herein can be used in conjunction with a wide variety of sensors and instruments. The measurement of distance is an obvious example but the measurement of many other parameters can also be reduced to the measurement of the difference between two optical paths, e.g. the measurement of pressure (one path length being modulated by the movement of a diaphragm subject to the pressure to be measured), the measurement of temperature (one path length being modulated by the thermal expansion of an article and/or a change in refractive index subject to the temperature to be measured), the measurement of acceleration or any other quantity which can induce or be transformed into a change of OPD. One particular application for a pressure sensor is for sensing pressure variations in the cylinders of an internal combustion engine.

It will also be appreciated that the integrated interferometer configuration described herein can be used to interrogate other types of sensors, such as Bragg gratings written into optical fibre. Bragg gratings are used to measure strain or temperature and the signal is encoded as a wavelength shift of the light returned from the grating. Using an unbalanced integrated interferometer with an OPD > 0, a change in input wavelength Δλ generates a phase shift ΔØ between the two beams according to ΔØ = 2πOPD/λ² Δλ. This phase shift can be retrieved using one of the signal processing schemes described above. As the sensitivity (induced phase shift per wavelength change) is proportional to the OPD of the interferometer, it is advantageous to employ a Michelson interferometer rather than a MZI.

The integrated interferometer described herein may also be used in other devices, such as switches (for switching an optical signal from one waveguide to another) and WDM (wavelength division multiplexing) devices, e.g. for splitting multi-wavelength light so that light of one wavelength is routed along one waveguide and light of another wavelength is routed along another waveguide.

## Claims

1. An interferometer integrated on an optical chip, which comprises a layer of silicon (1) separated from a substrate (2) by a layer of insulating material (3), the optical chip being provided with: fibre connection means (13) for connecting the optical chip to one or more optical fibres (6), the fibre connection means (13) comprising a groove (5) formed in the substrate (2) for receiving an optical fibre (6); and waveguide means for transmitting light to or from the fibre connection means (13) and forming an interferometer arranged to receive light from the fibre connection means (13) in which light transmitted along different optical paths can be combined, the waveguide means (4) comprising rib waveguides formed in the said layer of silicon (1); and at least one of the rib waveguides comprising a phase modulator (14) to alter the phase of light travelling along the said at least one rib waveguide, so the effective path length of at least one of the said optical paths can be altered.

2. An interferometer as claimed in Claim 1 in which a light source (10) and/or a light detector (15) is also integrated on the optical chip.

3. An interferometer as claimed in claim 2 in which the light source (10) and/or detector (15) are mounted in a location recess formed in the chip having at least two, non-parallel location surfaces (16, 19) against which respective surfaces of the light source (10) and/or light detector (15) abut so as to align the light source (10) and/or light detector (15) with a waveguide (4) on the chip.

4. An interferometer as claimed in Claim 1, 2 or 3 in which the phase modulator (14) is in the form of a doped junction (8A, 9, 8B) formed across a rib waveguide (4).

5. An interferometer as described in any preceding claim in which the phase modulator (14) is a thermal modulator.

6. An interferometer as claimed in any preceding claim arranged as a Mach-Zehnder interferometer.

7. An interferometer as claimed in any preceding claim arranged to process a signal received from remote sensing means (11) connected thereto by an optical fibre (6).

8. An interferometer as claimed in any preceding claim arranged as a processing interferometer for processing signals received from or sent to a sensing interferometer (11).

9. An interferometer as claimed in Claim 7 or 8 connected to sensing means (11) or a sensing interferometer (11) arranged to sense a quantity, a change of which produces or can be transformed into a change of an optical path difference.

10. An interferometer as claimed in Claim 9 in which the sensing interferometer (11) is a Fabry-Perot type cavity.

11. An interferometer as claimed in Claim 10 in which the Fabry-Perot type cavity is arranged to measure pressure.

12. An interferometer as claimed in Claim 11 in which the Fabry-Perot type cavity is arranged to measure pressure within a cylinder of an internal combustion engine.

13. An interferometer as claimed in Claim 9 in which the sensing means (11) comprises a Bragg grating structure.

14. An interferometer as claimed in any preceding claim connected to electronic processing means for processing an output thereof.

15. An interferometer as claimed in Claim 14 in which the processing means is arranged to use a phase locking technique to lock the phase difference between signals being sensed at a selected value.

16. An interferometer as claimed in Claim 14 or 15 in which the processing means is arranged to use the two complementary output signals produced by the interferometer.

17. An interferometer as claimed in any preceding claim connected to a white-light source (10).

18. An interferometer as claimed in Claims 9 and 17 in which the said optical path difference is greater than the coherence length of the white-light source (10).

19. An interferometer as claimed in any preceding claim comprising two phase modulators (14, 14) arranged to work in a pseudo push-pull state.

20. An interferometer as claimed in any preceding claim in which a plurality of sensing means (11, 11A) are multiplexed therewith.

## Patentansprüche

1. Interferometer, der auf einem optischen Chip integriert ist und folgendes umfasst: eine Schicht aus Silicium (1), die durch eine Schicht aus Isoliermaterial (3) von einem Substrat (2) getrennt ist, wobei der optische Chip bestückt ist mit: einem LWL-Verbindungsmittel (13) zum Verbinden des optischen Chips mit einem oder mehreren Lichtwellenleitern (6), wobei das LWL-Verbindungsmittel (13) eine in dem Substrat (2) ausgebildete Rille (5) zum Aufnehmen eines Lichtwellenleiters (6) umfasst; und Hohlleitern zum Übertragen von Licht zu oder von dem LWL-Verbindungsmittel (13) und zum Bilden eines Interferometers, der so gestaltet ist, dass er Licht von dem LWL-Verbindungsmittel (13) empfängt, in dem über unterschiedliche Lichtwege übertragenes Licht kombiniert werden kann, wobei die Hohlleiter (4) in der genannten Siliciumschicht (1) ausgebildete Rippenhohlleiter umfassen; und wobei wenigstens einer der Rippenhohlleiter einen Phasenmodulator (14) umfasst, um die Phase von über den genannten wenigstens einen Rippenhohlleiter wanderndem Licht so zu ändern, dass die effektive Weglänge von wenigstens einem der genannten Lichtwege geändert werden kann.

2. Interferometer nach Anspruch 1, bei dem eine Lichtquelle (10) und/oder ein Lichtdetektor (15) ebenfalls auf dem optischen Chip integriert ist/sind.

3. Interferometer nach Anspruch 2, bei dem die Lichtquelle (10) und/oder der Lichtdetektor (15) in einer in dem Chip ausgebildeten Ausnehmung mit wenigstens zwei nicht parallelen Flächen (16, 19) montiert sind, an denen jeweilige Oberflächen der Lichtquelle (10) und/oder des Lichtdetektors (15) anliegen, um die Lichtquelle (10) und/oder den Lichtdetektor (15) auf einen Hohlleiter (4) auf dem Chip auszurichten.

4. Interferometer nach Anspruch 1, 2 oder 3, bei dem der Phasenmodulator (14) die Form eines dotierten Übergangs (8A, 9, 8B) hat, der über einen Rippenhohlleiter (4) ausgebildet ist.

5. Interferometer nach einem der vorherigen Ansprüche, bei dem der Phasenmodulator (14) ein thermischer Modulator ist.

6. Interferometer nach einem der vorherigen Ansprüche, der als Mach-Zehnder-Interferometer gestaltet ist.

7. Interferometer nach einem der vorherigen Ansprüche, der so gestaltet ist, dass er ein Signal verarbeitet, dass er von einem über einen Lichtwellenleiter (6) mit ihm verbundenen abgesetzten Abfühlmittel (11) empfangen hat.

8. Interferometer nach einem der vorherigen Ansprüche, der als ein Verarbeitungsinterferometer zum Verarbeiten von Signalen gestaltet ist, die von einem Abfühlinterferometer (11) empfangen oder zu einem solchen gesendet werden.

9. Interferometer nach Anspruch 7 oder 8, das mit einem Abfühlmittel (11) oder einem Fühlerinterferometer (11) verbunden ist, das so gestaltet ist, dass es eine Menge abfühlt, deren Änderung eine Änderung einer Lichtwegdifferenz erzeugt oder in eine solche umgewandelt werden kann.

10. Interferometer nach Anspruch 9, bei dem der Fühlerinterferometer (11) ein Hohlraum des Fabry-Perot-Typs ist.

11. Interferometer nach Anspruch 10, bei dem der Hohlraum des Fabry-Perot-Typs zum Messen von Druck gestaltet ist.

12. Interferometer nach Anspruch 11, bei dem der Hohlraum des Fabry-Perot-Typs so gestaltet ist, dass er Druck in einem Zylinder eines Motors mit Innenverbrennung misst.

13. Interferometer nach Anspruch 9, bei dem das Abfühlmittel (11) eine Bragg-Gitterstruktur umfasst.

14. Interferometer nach einem der vorherigen Ansprüche, der an ein elektronisches Verarbeitungsmittel zum Verarbeiten eines Ausgangs davon angeschlossen ist.

15. Interferometer nach Anspruch 14, bei dem das Verarbeitungsmittel so gestaltet ist, dass es die Phasendifferenz zwischen bei einem gewählten Wert gefühlten Signalen mit Hilfe einer Phasenregeltechnik rastet.

16. Interferometer nach Anspruch 14 oder 15, bei dem das Verarbeitungsmittel so gestaltet ist, dass es die beiden komplementären, von dem Interferometer erzeugten Ausgangssignale verwendet.

17. Interferometer nach einem der vorherigen Ansprüche, das an eine Weißlichtquelle (10) angeschlossen ist.

18. Interferometer nach Anspruch 9 und 17, bei dem die genannte Lichtwegdifferenz größer ist als die Kohärenzlänge der Weißlichtquelle (10).

19. Interferometer nach einem der vorherigen Ansprüche, umfassend zwei Phasenmodulatoren (14, 14), die so angeordnet sind, dass sie in einem Pseudo-Gegentaktzustand arbeiten.

20. Interferometer nach einem der vorherigen Ansprüche, bei dem eine Mehrzahl von Abfühlmitteln (11, 11A) damit multiplexiert wird.

## Revendications

1. Un interféromètre intégré sur une puce optique, qui comprend une couche de silicium (1) séparée d'un substrat (2) par une couche de matériau isolant (3), la puce optique étant dotée de : moyens de connexion de fibre (13) pour connecter la puce optique à une ou plusieurs fibres optiques (6), les moyens de connexion de fibre (13) comprenant une rainure (5) formée dans le substrat (2) pour recevoir une fibre optique (6) ; et des moyens guides d'ondes pour transmettre la lumière aux moyens de connexion de fibre (13) ou à partir de ceux-ci et formant un interféromètre agencé pour recevoir de la lumière à partir des moyens de connexion de fibre (13) dans lesquels la lumière transmise le long de parcours optiques différents peut être combinée, les moyens guides d'ondes (4) comportant des guides d'ondes nervurés formés dans ladite couche de silicium (1) ; et l'un au moins des guides d'ondes nervurés comprend un modulateur de phase (14) pour modifier la phase de la lumière qui passe le long du ou de chacun desdits guides d'onde nervurés, de sorte que la longueur effective du parcours de l'un au moins desdits parcours optiques peut être modifiée.

2. Un interféromètre selon la Revendication 1, dans lequel une source lumineuse (10) et/ou un détecteur de lumière (15) est/sont également intégré(s) sur la puce optique.

3. Un interféromètre selon la Revendication 2, dans lequel la source lumineuse (10) et/ou le détecteur (15) sont montés dans un évidement de montage formé dans la puce, ayant au moins deux surfaces de montage non parallèles (16, 19) contre lesquelles viennent buter des surfaces respectives de la source lumineuse (10) et/ou du détecteur de lumière (15) de sorte à aligner la source lumineuse (10) et/ou le détecteur de lumière (15) avec un guide d'onde (4) sur la puce.

4. Un interféromètre selon la Revendication 1, 2 ou 3, dans lequel le modulateur de phase (14) revêt la forme d'une jonction dopée (8A, 9, 8B) formée en travers d'un guide d'onde nervuré (4).

5. Un interféromètre selon l'une quelconque des revendications précédentes, dans lequel le modulateur de phase (14) est un modulateur thermique.

6. Un interféromètre selon l'une quelconque des revendications précédentes, agencé comme interféromètre de Mach-Zehnder.

7. Un interféromètre selon l'une quelconque des revendications précédentes, agencé pour traiter un signal émis par des moyens de captage (11) éloignés connectés à l'interféromètre par une fibre optique (6).

8. Un interféromètre selon l'une quelconque des revendications précédentes, agencé comme interféromètre de traitement pour traiter des signaux reçus ou émis par un interféromètre détecteur (11).

9. Un interféromètre selon la Revendication 7 ou 8, connecté à des moyens détecteurs (11) ou un interféromètre détecteur (11) agencé pour détecter une quantité, dont un changement produit un changement d'une différence de parcours optique ou peut être transformé en ce changement.

10. Un interféromètre selon la Revendication 9, dans lequel l'interféromètre détecteur (11) est une cavité de Fabry-Perot.

11. Un interféromètre selon la Revendication 10, dans lequel la cavité de type Fabry-Perot est agencée pour mesurer une pression.

12. Un interféromètre selon la Revendication 11, dans lequel la cavité de type Fabry-Perot est agencée pour mesurer une pression à l'intérieur d'un cylindre d'un moteur à combustion interne.

13. Un interféromètre selon la Revendication 9, dans lequel les moyens détecteurs (11) comprennent une structure en réseau de Bragg.

14. Un interféromètre selon l'une quelconque des revendications précédentes, connecté à des moyens de traitement électronique pour traiter une sortie de celui-ci.

15. Un interféromètre selon la Revendication 14, dans lequel les moyens de traitement sont agencés pour utiliser une technique de verrouillage de phase pour verrouiller la différence de phase entre les signaux en cours de détection sur une valeur sélectionnée.

16. Un interféromètre selon la Revendication 14 ou 15, dans lequel les moyens de traitement sont agencés pour utiliser les deux signaux de sortie complémentaires produits par l'interféromètre.

17. Un interféromètre selon l'une quelconque des revendications précédentes, connecté à une source de lumière blanche (10).

18. Un interféromètre selon les Revendications 9 et 17, dans lequel ladite différence de parcours optique est plus grande que la longueur de cohérence de la source de lumière blanche (10).

19. Un interféromètre selon l'une quelconque des revendications précédentes, comprenant deux modulateurs de phase (14, 14) agencés pour fonctionner en un état pseudo symétrique.

20. Un interféromètre selon l'une quelconque des revendications précédentes, dans lequel une pluralité de moyens détecteurs (11, 11A) sont multiplexés avec celui-ci.
